# EUROPÄISCHE PATENTSCHRIFT

(11) **EP 3 243 060 B1**
(45) Veröffentlichungstag und Bekanntmachung des Hinweises auf die Patenterteilung: **04.12.2019**
(21) Anmeldenummer: 16706965.7
(22) Anmeldetag: 06.01.2016
(51) Int. Cl.: G01N 11/00, G05D 23/19, B01L 7/00

(54) **TEMPERIERANORDNUNG FÜR MESSGERÄTE**
TEMPERATURE-CONTROL ASSEMBLY FOR MEASURING DEVICES
DISPOSITIF DE RÉGULATION DE TEMPÉRATURE POUR APPAREILS DE MESURE

(30) Priorität: 09.01.2015 DE 102015100272
(43) Veröffentlichungstag der Anmeldung: 15.11.2017
(73) Patentinhaber: AMETEK Germany GmbH, 01109 Dresden (DE)
(72) Erfinder: MARX, Eckard, 01471 Radeburg (DE); GOLLA, Stefan, 01157 Dresden (DE); LOTZING, Helmut, 01458 Ottendorf-Okrilla (DE)
(74) Vertreter: Sperling, Thomas
(86) Internationale Anmeldenummer: PCT/DE2016/100004
(87) Internationale Veröffentlichungsnummer: WO 2016/110291

(56) Entgegenhaltungen:
- US-A1- 2002 014 894
- US-A1- 2003 155 939
- US-A1- 2010 152 066
- US-A1- 2010 227 383
- US-A1- 2013 128 915

## Beschreibung

Die Erfindung betrifft eine Temperieranordnung für Messgeräte, bei denen eine effiziente Kühlung und Heizung der Proben zur Messung von deren Eigenschaften erforderlich sind.

Die Bestimmung von Materialeigenschaften von Proben ist in der Regel eng verknüpft mit der Einhaltung definierter Randbedingungen bei der Anwendung der Messverfahren. Beispielsweise ist die Bestimmung der physikalischen Größe der Viskosität ganz entscheidend von der Temperatur der Probe abhängig. Somit besteht bei der Gestaltung von Rheometern zur Messung der Viskosität beispielsweise das Erfordernis, die Temperatur der Probe sehr präzise einzustellen, um exakte Parameter bestimmen zu können.

Weiterhin ist es beispielsweise bei der Bestimmung rheologischer Parameter häufig wünschenswert, auch eine Veränderung der Temperatur der Probe während der Messung vornehmen zu können. Zudem ist eine zeitlich schnelle Wärmezu- oder -abfuhr für die exakte Regelung der Temperatur wichtig.

Aus dem Stand der Technik sind Rheometer bekannt, welche somit die Möglichkeit der Erwärmung der zu vermessenden Fluide vorsehen.

Beispielsweise geht aus der WO 87/245 A1 ein Rheometer hervor, welches als Rotationsviskosimeter ausgestaltet ist und welches Mittel zur Induktionsheizung der Probenaufnahme besitzt, um die Probe zu erwärmen und mittels Regelung auf einer bestimmten Temperatur zu halten.

Aus der US 6,588,254 B1 geht ein Rotationsrheometer hervor, welches neben der Möglichkeit der Erwärmung der Proben auch die Möglichkeit der Probenkühlung vorsieht, wodurch sich weitere Anwendungsbereiche für das Messgerät ergeben.

In der US 2005/0199044 A1 wird schließlich eine Wärmeverteilvorrichtung für Rotationsrheometer offenbart, welche mit Peltier-Heizelementen und einer Kühlvorrichtung ausgestattet ist. In besonderer Weise wird dabei die Erwärmung und Kühlung der Probe von einer Oberseite und einer Unterseite gewährleistet, wobei Einflüsse in der Art eines Kamineffektes auf die Temperaturverteilung in der Probe weitgehend vermieden werden.

Aus der US 2010/227383 A1 ist eine Temperiervorrichtung für ein biochemisches Messgerät bekannt, welches ein Kühlvorrichtung temporär mit einer Probe mittels einer Kontaktiervorrichtung in thermischen Kontakt bringen kann.

Weiterhin ist aus der US 2010/152066 A1 eine Temperaturkontrollvorrichtung und Verfahren bekannt, welche in der Biochemie zur Temperierung von Proben bei der PCR dienen.

Die US 2013/128915 A1 betrifft ein Temperaturkontrollelement für die Erwärmung und das schnelle Kühlen von Proben zum Zwecke der Messung, wobei Heiz- und Kühlelemente zueinander in entsprechende Position zueinander gebracht werden.

Nach der US 2002/014894 A1 ist ein Temperaturkontrollapparat bekannt, bei welchem der Kühler und der Heizer miteinander in Verbindung gebracht werden.

Schließlich offenbart die US 2003/155939 A1 eine thermische Spannvorrichtung für wafer, wobei der Kühler im Verhältnis zur Wärmeverteilplatte bewegbar ist.

Im Stand der Technik ist unter anderem das Problem bekannt, dass die Charakteristik der Temperaturverteilung, die Dynamik und die Gleichmäßigkeit häufig nur ungenügend gelöst sind und dass das Regelverhalten bei der Erwärmung und bei der Kühlung der Proben in vielen Fällen nicht ausreichend und verzögert ist.

Ein weiterer Aspekt bei der Temperierung der Messgeräte besteht darin, dass die Laborgeräte überwiegend zur Heizung und Kühlung mittels Elektroenergie betrieben werden.

Die zugeführte Wärme für das Aufheizen auf relativ hohe Temperaturen als auch das schnelle und dauerhafte Kühlen und Halten von Temperaturen unterhalb der Umgebungstemperatur führen in kompakten oder geschlossenen Kreisläufen in Messsystemen zu einer Erhöhung der Systemtemperatur. Eine höhere Systemtemperatur kann zum einen kritisch für die gesamte Messanordnung durch Ausdehnung und Spaltbildung unter Lösen oder Schließen von thermischen Kontakten und zur Verstimmung der gekoppelten Messanordnung führen. Zum anderen wird durch eine höhere Systemtemperatur das Kühlverhalten im Einsatzgebiet erheblich beeinträchtigt. Beide Phänomene verschlechtern den Einsatzbereich oder erfordern aufwendige Gegenmaßnahmen.

Der geforderte energieeffiziente Einsatz für die Probentemperierung trägt zudem auch dem Aspekt der Gerätebetriebskostensenkung und dem sparsamen Energieverbrauch Rechnung. Dies sind wichtige Merkmale für den Umweltschutz und für die Anwender- beziehungsweise Kundenzufriedenheit.

Die Aufgabe der Erfindung besteht somit darin, eine Temperieranordnung für Messgeräte zur Verfügung zu stellen, welche hinsichtlich der Dynamik der Erwärmung und der Kühlung der zu untersuchenden Proben verbessert ist. Weiterhin soll der Energieverbrauch des Messgerätes für die Temperierung der Proben vermindert werden.

Die Aufgabe wird durch einen Gegenstand mit den Merkmalen gemäß den selbstständigen Patentansprüchen gelöst. Weiterbildungen sind in den abhängigen Patentansprüchen angegeben.

Die Aufgabe der Erfindung wird durch eine Temperieranordnung für Messgeräte gelöst, welche dadurch gekennzeichnet ist, dass die Probe auf einer Messplatte angeordnet ist, wobei die Messplatte über ein Heizsystem beheizbar und über ein Kühlsystem kühlbar ist. Eine Besonderheit der erfindungsgemäßen Lösung besteht darin, dass das Kühlsystem über eine Kontaktiervorrichtung mit dem Heizsystem mechanisch temporär in thermischen Kontakt bringbar ausgebildet ist.

Konzeptionsgemäß wird die Probe auf einer Messanordnung platziert, wobei die Messanordnung, auch als Probeaufnahme oder Messplatte bezeichnet, thermisch mit einem Heizsystem kontaktiert ist. Das Heizsystem erwärmt die Messplatte mit der Probe. Über eine Regelung ist eine Thermostatierung des Messsystems vorgesehen, wobei im Falle einer erforderlichen Kühlung das Heizsystem mit einem effizienten Kühler über eine Kontaktiervorrichtung in thermischem Kontakt gebracht wird. Der Kühler des Kühlsystems nimmt bei Kontakt mit dem Heizsystem Wärme von diesem auf und senkt somit zunächst die Temperatur des Heizsystems. Das Heizsystem ist derart ausgebildet, dass es möglichst eine geringe Wärmespeicherkapazität aufweist, so dass die dem Heizsystem zuvor zugeführte Wärmeenerie möglichst gering ist und sodann weniger Wärme dem Heizsystem mit Messplatte und Probe entzogen werden muss.

Die Reduzierung der effektiven thermischen Massen ist ein weiteres Merkmal der Temperiereinrichtung, die somit ein besonders schnelles und damit effizientes Kühlen und Heizen ermöglicht, unabhängig davon, ob die Kühleinrichtung mit dem Heizsystem verbunden ist oder nicht.

Die Kontaktiervorrichtung bildet in thermisch isolierender Stellung einen Luftspalt und in thermisch kontaktierter Stellung keinen Luftspalt zwischen dem Kühler und dem Heizsystem aus.

Die Kontaktiervorrichtung wirkt als mechanische Kontaktiervorrichtung, so dass der Kühler des Kühlsystems mechanisch in eine Kühlstellung bewegt wird, bei welcher der Kühler mit dem Heizsystem und über dieses mit der Probe in thermischem Kontakt ist. Der Kontakt wird gelöst und das Kühlsystem vom Heizsystem wegbewegt, sobald eine Kühlung nicht mehr erforderlich oder eine Heizung wieder erforderlich ist. Nachdem das Kühlsystem vom Heizsystem mechanisch getrennt ist, befindet sich zwischen beiden ein Luftspalt, welcher die Wärmeleitung zwischen dem Kühlsystem und dem Heizsystem unterbricht und nur noch ein geringer Anteil Wärmeenergie durch Strahlung zwischen den beiden Systemen übertragen wird.

Die Kontaktiervorrichtung ist bevorzugt zum mechanischen linearen Bewegen des Kühlers in vertikaler Richtung ausgebildet, sofern die Messplatte, der Heizer und der Kühler in vertikaler Richtung unter- oder übereinander angeordnet sind.

Vorteilhaft wird ein Hebewerk für die lineare Bewegung des Kühlers vorgesehen.

Als Hebewerk wird allgemein eine Vorrichtung verstanden, die geeignet und ausgebildet ist, um eine Komponente, wie beispielsweise den Kühler, zu einer anderen Komponente, wie beispielsweise den Heizer, zu bewegen. Durch die Bewegung der Komponente oder auch beider Komponenten aufeinanderzu wird ein Luftspalt verringert oder entgegengesetzt entsteht ein Luftspalt zwischen den beiden Komponenten.

Vorteilhaft ist das Hebewerk für die lineare Bewegung des Kühlers als Schneckengetriebe oder als Nockengetriebe mit Nocken ausgeführt.

Alternativ ist das Hebewerk für die lineare Bewegung des Kühlers als mechanische Hebeleinrichtung ausgeführt.

Wiederum alternativ ist das Hebewerk für die lineare Bewegung des Kühlers mittels Linearantrieb ausgeführt.

Die Erfindung umfasst weiterhin Hebewerke für die lineare Bewegung des Kühlers in der beispielhaften Ausgestaltung als Luft-Vakuum-Gasdruckzylinder, phasenwechselndes Material mit Dickenänderung oder mit der Erzeugung von Luftblasen.

Bevorzugt wird die Kontaktkraft zur thermischen Kontaktierung von Kühler und Heizer durch Federn, beispielsweise Spiralfedern, realisiert.

Das Heizsystem ist aus einem Peltierheizer und einem elektrischen Widerstandsheizer ausgebildet. Hierbei befindet sich das Peltierelement zwischen der Messplatte und der Heizplattform mit den elektrischen Heizelementen. Da die elektro-thermische Reaktionszeit eines Peltierelements wesentlich geringer ist als die der massereicheren Heizplatte, ermöglicht diese Anordnung eine genauere Temperatursteuerung. Aufgrund der Tatsache, dass die Oberflächen der verwendeten Komponenten nicht perfekt planar sind, wird bevorzugt eine Wärmeleitfolie auf der Ober- und Unterseite des Peltierelements verwendet. Hier hat sich eine Graphitfolie bewährt, da diese weder hygroskopisch noch thermisch instabil ist und in ihrer Stärke Unebenheiten in der Weise ausgleicht, dass der Druck von Deformationen das Peltierelement nicht beschädigen. Bevorzugt ist das Kühlsystem aus einem Kühler aufgebaut, der von einem flüssigen Kälteträger durchströmbar und/oder zur zusätzlichen Kühlung von Luft umströmbar ausgebildet und in der Temperieranordnung angeordnet ist.

Das Kälteträgersystem besteht nach einer Weiterbildung der Erfindung aus einem Kälteträgerkreislauf mit einem Kälteträgerspeicher, einer Pumpe und diese verbindende Fluidleitungen.

Der Kälteträgerkreislauf ist als interner Kälteträgerkreislauf ausgebildet, in den die aufgenommene Wärme von der Kontaktstelle mit dem Peltier-Heizsystem über ein Wärmeträgeröl beispielsweise zu einem Wärmeübertrager geleitet wird. Dort wird die übertragene Wärme entweder an das Gerät selbst, an einen Luftkühlkörper oder an einen externen Kühlkreislauf abgegeben. In Strömungsrichtung fließt das Kühlmittel durch eine Pumpe und weiter über einen Ausgleichsbehälter wieder zurück zum Kühlkörper am Heizsystem. Hierbei kann die Anordnung von Pumpe und Kälteträgerspeicher vertauscht werden.

Der Kälteträgerspeicher erfüllt gleichzeitig die Funktion eines Druckausgleichsbehälters, wenn die Druckaufnahme, verursacht durch die thermische Ausdehnung des Kühlmittels, nicht anderweitig kompensiert wird.

Als Weiterbildung der Erfindung ist vorteilhaft ein weiterer Wärmeübertrager zwischen der Pumpe oder dem Druckausgleichsbehälter zum kontaktierten Kühlkörper am Heizsystem vorgesehen. Somit kann die Vorlauftemperatur für das Kühlsystem in dieser zweiten Stufe zusätzlich gesenkt werden. Dies kann sowohl mit einem zweiten Luftkühlkörper, dem Gerätegehäuse oder in Kombination mit einem Wärmetauscher einer externen Kühlung umgesetzt werden. Hierbei sind alle genannten Komponenten mittels Fluidleitungen verbunden.

Die Anordnung der Pumpe jeweils von beiden Seiten zwischen zwei Wärmeübertragern, beziehungsweise dem Wärmeträgerspeicher, dient dem Schutz der Pumpe vor zu hohen thermischen Belastungen durch zu heißes Kühlmittel.

Die Kühlung des Luftkühlkörpers kann sowohl passiv als auch aktiv durch einen Ventilator realisiert sein.

Bevorzugt wird zur Unterstützung der Kühlung des Kühlers dieser selbst mit Kühlluft mittels eines Ventilators von außen zusätzlich gekühlt.

Nach einer besonders bevorzugten Ausgestaltung der Erfindung ist der Peltierheizer auch als Peltierkühler betreibbar ausgebildet, wodurch die Dynamik von Heizung und Kühlung weiter verbessert wird.

Besonders vorteilhaft wird die Erfindung dadurch weitergebildet, dass eine separate externe Kühleinrichtung zur Kühlung des Kälteträgers vorgesehen ist.

Der Kühler selbst, welcher mittels der Kontaktiervorrichtung mit dem Heizsystem thermisch verbunden wird, ist aus einem Kühlkörper und einem Deckel ausgebildet, wobei im Kühlkörper Rippen zur Abgabe von Wärme an das Kälteträgerfluid angeordnet sind.

Besonders bevorzugt ist der Kühlkörper aus Kupfer ausgebildet, wodurch eine optimale Temperaturverteilung innerhalb des Kühlkörpers durch die Wärmeleitungseigenschaften von Kupfer erreicht wird.

Ein erfindungsgemäßes Verfahren zur Temperierung einer Probe in einem Messgerät mit einer Temperieranordnung ist dadurch gekennzeichnet, dass das Peltierelement nicht als Heizelement, sondern als thermischer Schalter fungiert, der zusätzlich bei Annäherung an die Zieltemperatur zur Feinregelung betrieben wird. Dieses Verfahren ist dem Prinzip geschuldet, dass das Peltierelement zwischen der Heizplattform und der Messplatte angeordnet ist, um eine Feinregelung durch seine erheblich geringere Regel-Reaktionszeit zu ermöglichen. Da im Gegensatz zu einem Kupfer-Wärmeleitträger-Messplatte-System ein Peltierelement passiv als thermischer Isolator wirkt, entsteht beim Heizvorgang ein sehr großer Temperaturunterschied zwischen Messplatte und Heizelement. Dies macht zum einen die Heizung sehr ineffizient und zum anderen können schnell Temperaturdifferenzen von über 60 Kelvin entstehen, die das Peltierelement zerstören. Weiterhin verkürzt sich die Lebensdauer des Peltierelements unter Volllastbetrieb beim Heizen erheblich über mehrere Größenordnungen von Stunden. Daher ist der Einsatz des Peltierelements in seiner Funktion als thermischer Schalter vorgesehen. Der Einsatz des Peltierelements beschränkt sich darin, die Wärmeleitung zwischen Heizplattform und Messplatte zu verbessern, indem nur etwa eine Größenordnung geringere elektrische Leistung gegenüber der Heizplattform mit der Heizrichtung zur Messplatte in das Peltierelement gelenkt wird. Im Anwendungsfall hat sich der Wert von 1/20 als vorteilhaft erwiesen, wobei die Kühlung von Pumpe und Lüfter abgeschaltet und vom Kühlsystem entkoppelt beheizt werden.

Die Kühlung der Probe erfolgt nach Abschaltung des Heizsystems, wobei der thermische Kontakt des Kühlsystems zum Heizsystem mittels Kontaktiervorrichtung hergestellt und die Fluidkühlung eingeschaltet werden. Während der Kühlung muss die Wärme auf die Wärmesenke übertragen werden. Dies ist möglich mit einem zusätzlichen internen geschlossenen Kältesystem, welches nur während der Kühlungsphasen aktiv ist und nicht permanent arbeitet. Die bewegbare Wärmesenke, der Kühler, hat nur während der Kühlungsphase einen thermischen Kontakt, während der Phasen der Erwärmung hat die Wärmesenke keinen thermischen Kontakt. Zusammen mit der Fluidkühlung und der geringen thermischen Masse der Wärmesenke fungiert das Peltierelement als thermischer Schalter und Peltierkühler, der die Kühlung im Bereich oberhalb der Umgebungstemperatur und die Flüssigkeits- und/oder Luftkühlung von der Messplatte weg fern der Volllast unterstützt. Erst bei Zieltemperaturen unterhalb der Umgebungstemperatur wird die volle Kühlleistung des Peltiersystems ausgenutzt. Darüber hinaus wird das Peltierelement zur Feinregelung bei der Zieltemperatur eingesetzt. Dieses Verfahren reduziert den thermisch-mechanischen Stress für das Peltierelement, was zu einer Verlängerung der Lebensdauer im Vergleich zu herkömmlichen Kühlsystemen mit Peltierelementen führt.

Beide beschriebenen Verfahren tragen erheblich zur Verbesserung der Energieeffizienz des Gesamtgerätes bei.

Das Verfahren zur Temperierung einer Probe in einem Messgerät mit einer Temperieranordnung ist insbesondere dadurch gekennzeichnet, dass
die Heizung der Probe bei vorgebbarer größerer Abweichung von Solltemperatur zu Probentemperatur mittels des elektrischen Heizers erfolgt und erst bei vorgebbarer geringerer Abweichung von Solltemperatur zu Probentemperatur die Heizung über das Peltierelement erfolgt und dass die Kühlung dabei abgeschaltet und das Kühlsystem mittels der Kontaktiervorrichtung thermisch vom Heizsystem getrennt sind und dass
die Kühlung der Probe nach Abschaltung des Heizsystems erfolgt, wobei der thermische Kontakt des Kühlsystems zum Heizsystem mittels der Kontaktiervorrichtung hergestellt und die Fluidkühlung eingeschaltet werden.

Im Unterschied zu Messgeräten nach dem Stand der Technik geht die Konzeption der Erfindung dahingehend, eine möglichst geringe thermische Speicherfähigkeit der Komponenten zu erreichen und diese noch weiter dadurch zu verringern, dass Komponenten gänzlich hinsichtlich ihrer Speicherfähigkeit vom System abgekoppelt werden können. Damit wird - im Vergleich zum Stand der Technik - eine vollständig andere Strategie verfolgt, weil nach dem Stand der Technik eine wesentliche Strategie bei der Temperierung von Proben in Messgeräten darin besteht, die thermische Masse möglichst groß zu halten, um Schwankungen gerade auszuschalten. Demgegenüber besteht ein großer Vorteil der Erfindung darin, dass durch die entgegengesetzte Strategie der Reduzierung der thermischen Speicherfähigkeit der Temperieranordnung und der Steuerbarkeit der thermischen Masse durch eine mechanische Kontaktiervorrichtung eine größere Flexibilität und eine Verbesserung der Dynamik des Regelvorganges der Temperatur erreicht werden können. Dies ist vorteilhafterweise mit einer Reduzierung der eingesetzten Energie für den Temperiervorgang verbunden.

Die Kühlung erfolgt in der Regel alternativ über einen externen Kühlkreislauf, der direkt an die Messplatte angeschlossen ist. Wird Wasser als Wärme-Kälteträger eingesetzt, ist folglich die maximale Heiztemperatur nur bis 100 °C und die Kühltemperatur bis zirka 0 °C in drucklosen Systemen erreichbar. Der Vorteil besteht jedoch darin, dass dies einfach zu realisieren ist und das elektrische Heizen unterstützt wird.

Anderenfalls ist die Kühlflüssigkeit beispielsweise ein Wärmeträgeröl, Heizöl oder eine Sole. Die Flüssigkeit wird extern gekühlt oder erwärmt und überträgt durch Anschlüsse am Gehäuse die Wärme an die Messplatte durch einen Wärmetauscher. Die Regelung der Temperatur erfolgt extern.

Diese Methode ist relativ ungenau und erfordert einen hohen Energieeinsatz und einen erheblichen Geräteplatz.

Bevorzugt wird die Kühlung durch eine Luftkühlung mittels Ventilator und/oder durch eine externe Kühleinrichtung unterstützt.

Konzeptionsgemäß ergeben sich diverse Vorteile aus der Gestaltung der erfindungsgemäßen Temperieranordnung. Zu nennen ist in erster Linie, dass die Dynamik der Regelung signifikant verbessert werden kann. Die einzelnen Komponenten der Temperieranordnung, wie das Kühlsystem und das Heizsystem, sind mit einer reduzierten thermischen Speichermasse ausgeführt, was zu einer Verbesserung der Dynamik des Temperierverhaltens führt. Weiterhin führt die Kombination geringer thermischer Massen bei der Wärmesenke und das Vorsehen einer Kühlung mittels eines geschlossenen Fluidkreislaufes als Kälteträgerkreislauf und einer Pumpe zu einer effizienten Kühlung der Probe. Das Kühlsystem und die Pumpe werden nur dann betrieben, wenn eine Kühlung erforderlich ist.

Die mechanische Kontaktiervorrichtung mit der bewegbaren Wärmesenke erzeugt einen Luftspalt, welcher im Falle der Heizung des Systems isolierend zum Kühlsystem hin wirkt. Bei der Heizung des Systems wird der thermische Kontakt durch das Zusammenbringen der Flächen des Kühlsystems und des Heizsystems hergestellt und Wärme kann über das Kühlsystem unter Kühlung des Heizsystems und damit der Probe entzogen werden.

Zusammengefasst besteht der besondere Vorteil für die Dynamik der Temperieranordnung in der Kombination von Luftkühlung und Flüssigkeitskühlung sowie von Peltierheizung und Peltierkühlung und der zusätzlichen elektrischen Beheizung sowie der bewegbaren Wärmesenke, welche bei Bedarf zur schnellen Kühlung aktiviert werden kann.

Die Dynamik des Temperiersystemes wird insbesondere durch eine Kombination von sehr gut oder nur zeitlich zweckmäßigem Verbund von trägen und ungenauen, aber leistungsstarken Heiz- und Kühlelementen und der Messplatte sowie dem direkt vorgeschalteten Peltierelement erreicht, wobei das Peltierelement eine nur geringere Leistung, aber eine schnelle Reaktion und Präzision ermöglicht. Zudem sind die Einzel- und Gesamtmassen des Systems minimiert, so dass die notwendige thermische Masse möglichst klein ist und die Regelung somit wenig Energie und Zeit benötigt, um die gewünschte Zieltemperatur zu erreichen.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Temperieranordnung für ein Rotationsviskosimeter vom Kegel-Platte-Typ,
- Fig. 2:: Kühler des Kühlsystems der Temperieranordnung,
- Fig. 3:: Deckel des Kühlers,
- Fig. 4:: Hebewerk als mechanische Hebeleinrichtung,
- Fig. 5:: Hebewerk als Linearantrieb,
- Fig. 6:: Hebewerk als Schneckengetriebe,
- Fig. 7a, b:: Hebewerk als Nockengetriebe mit vertikaler Drehachse und
- Fig. 8a, b:: Hebewerk als Nockengetriebe mit horizontaler Drehachse.

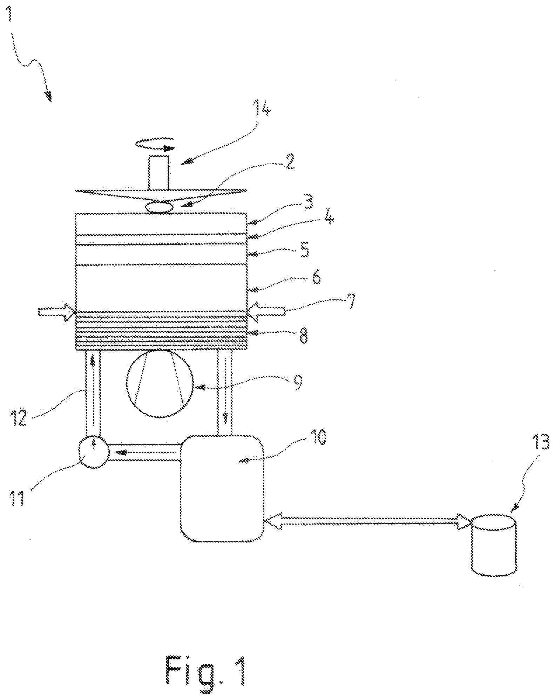

Das Heizungs- und Kühlsystem innerhalb der Temperieranordnung für ein Messgerät 1 gemäß Figur 1 besitzt prinzipiell folgenden Aufbau:
Die Platte für die Probenaufnahme 3, auch als Messplatte 3 bezeichnet, ist an ihrer Unterseite thermisch verbunden mit einem Peltierelement 5. Das Peltierelement 5 ist wiederum auf der Unterseite verbunden mit einem elektrischen Heizer 6, der als Widerstandsheizer ausgeführt ist. Dieser ist in vertikaler Richtung verbunden mit einer Wärmesenke, dem Kühler 8. Gegebenenfalls ist zwischen dem Peltierelement 5 und dem elektrischen Heizer 6 sowie zwischen dem elektrischen Heizer 6 und der Kontaktiervorrichtung 7 eine Wärmeleitfolie angeordnet, um den Wärmeübergang zwischen den Komponenten zu verbessern. Die Probe 2 befindet sich in dem dargestellten Ausführungsbeispiel zwischen der Messplatte 3 und dem Rotationskegel 14. Zwischen der Probenaufnahme 3 und dem Heizer 6 ist zur Verbesserung der Wärmeübertragung eine Wärmeleitschicht 4 als Wärmeleitpaste oder eine Wärmeleitfolie zur Verringerung der thermo-mechanischen Spannung und einer größeren Flächenkontaktierung angeordnet.

Die Wärme wird somit bei der Kühlung der Probe in vertikaler Richtung von oben nach unten übertragen, da die Bestandteile der Temperieranordnung in dieser Richtung zueinander angeordnet sind. Der elektrische Heizer 6 kann als Block, als Heizmantel, als Heizdraht, als Heizstab oder als Heizfolie in die Probenaufnahme 3 integriert sein.

Der geschlossene Fluidkreislauf enthält Fluidleitungen 12, eine Pumpe 11 und das Kälteträgerfluid und wird gegebenenfalls zusätzlich durch eine externe Kühleinrichtung 13 unterstützt. Weiterhin ist ein Wärmeübertrager vorgesehen, der auch als Kälteträgerspeicher und Druckausgleichsbehälter 10 ausgebildet ist, sowie eine Steuer- und Regeleinrichtung.

Zwischen dem Heizer 6 und dem Kühler 8 mit den Fluidkanälen ist ein thermischer Kontaktmechanismus als Kontaktiervorrichtung 7 ausgebildet. Dieser Mechanismus erzeugt einen Luftspalt zwischen dem Heizer 6 und dem Kühler 8, wodurch der thermische Kontakt und damit die Abfuhr von Wärmeenergie aus dem Heizer 6 und damit aus der Probenaufnahme 3 beziehungsweise der Messplatte 3 gesteuert werden kann. Diese mechanische Kontaktiervorrichtung 7 wird elektronisch gesteuert. Ein zusätzlicher Ventilator 9 ist unterhalb des Kühlers 8 vorgesehen, um den Kühlprozess zu beschleunigen, wobei der Ventilator 9 gleichfalls elektronisch gesteuert ausgeführt ist.

Während des Heizvorgangs und dem Messbetrieb bei einer eingeregelten höheren Temperatur sind der Kühler 8 und der Heizer 6 mittels der Kontaktiervorrichtung 7 über einen Luftspalt im Wesentlichen thermisch getrennt voneinander beziehungsweise ist die Wärmeleitung durch den Luftspalt unterbrochen. Weiterhin sind die Pumpe 11 des Kälteträgerkreislaufes und der Ventilator 9 für die Luftkühlung des Kühlers 8 ausgeschaltet und das Fluid steht im Kühler 8. Wegen der schlechten thermischen Leitfähigkeit des Fluids erfolgt nur eine geringe Wärmeaufnahme in den Leitungen des Kälteträgers, so dass nach einiger Zeit ein thermisches Gleichgewicht in den Leitungen und dem Heizblock der Pumpe 11 sowie den Wärmeübertragern sich ausbildet.

Zur Kühlung der Messplatte 3 wird die elektrische Energie des elektrischen Heizers 6 abgeschaltet, der thermische Kontaktmechanismus der Kontaktiervorrichtung 7 wird deaktiviert, wodurch ein thermischer Kontakt zwischen dem Kühler 8 und dem Heizer 6 hergestellt wird, die Pumpe 11 startet und das Fluid zirkuliert, so dass schnell Wärme vom Kühler 8 aufgenommen und abtransportiert wird. Die Wärme wird von der Probe 2 über die Probenaufnahme 3, das Peltierelement 5 und den Heizer 6 auf den Kühler 8 übertragen, welcher mit seinem Metallkörper über sehr gute Wärmeleitungseigenschaften verfügt und die Wärme dann an das Fluidsystem effizient übertragen kann.

Die Kühlung wird durch die Verwendung einer Luftkühlung in direkter Verbindung zum Kühler 8, der als Metallkühlkörper ausgebildet ist, unterstützt. Ist die mögliche thermische Masse des Metallkühlkörpers größer als die des Heizers 6, ist dieser somit in der Lage, kurzzeitig viel Wärme nach Kontaktierung durch die Kontaktiervorrichtung 7 aufzunehmen.

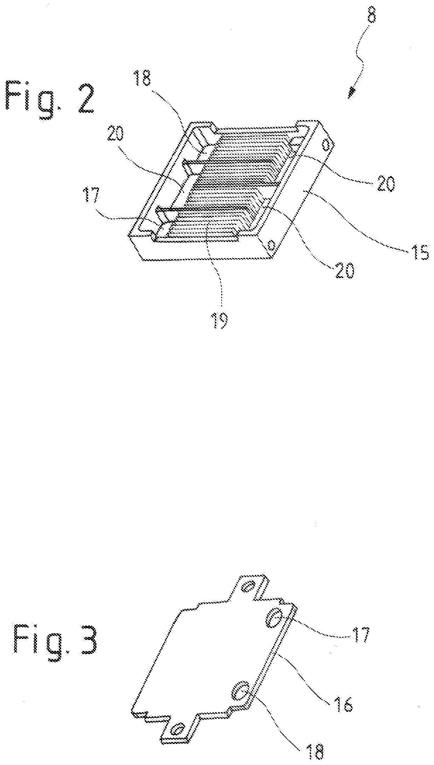

In Figur 2 und Figur 3 ist der Kühler 8 gemäß einer vorteilhaften Ausgestaltung dargestellt. Der Kühler 8 besteht im Wesentlichen aus einem Kühlkörper 15 und einem Deckel 16. Der Kühlkörper 15 weist Rippen 19 auf, zwischen denen der Kälteträger von einem Fluideingang 17 zu einem Fluidausgang 18 über Umlenkbereiche 20 mäanderförmig mehrflutig durchströmt wird und dabei Wärme aufnimmt.

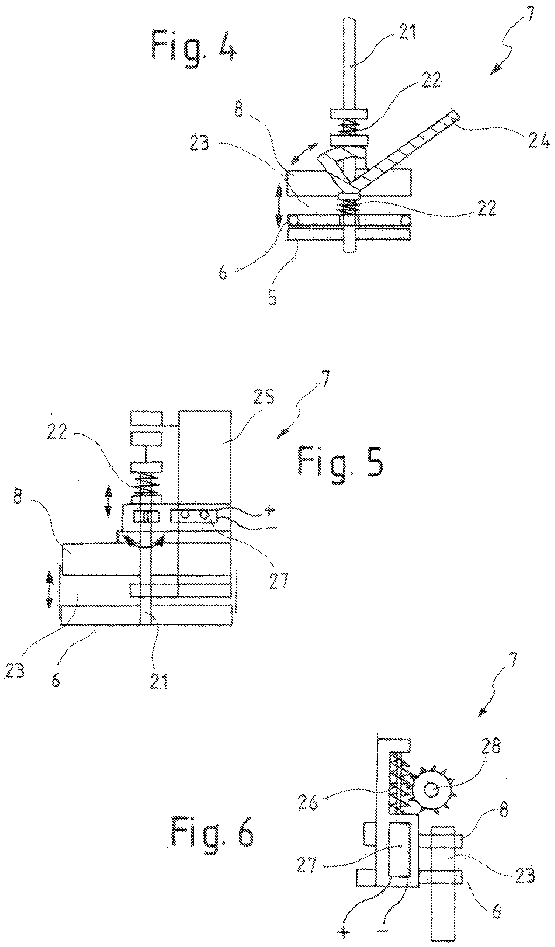

Ausgestaltungen der Kontaktiervorrichtung 7 sind in den Figuren 4 bis 8 dargestellt und nachfolgend exemplarisch beschrieben.

In der nicht dargestellten Messplatte sind mindestens zwei, jedoch maximal vier Bolzen 21 senkrecht von unten eingelassen. Auf diese aufgefädelt, geklemmt oder geschraubt ist der Peltierheizer 5 mechanisch mit Gegendruck über die Bolzen 21 verbunden. Zur mechanischen Verbesserung der Druckverteilung über die gesamte Auflagefläche werden am oberen Ende der Bolzen 21 Federn 22 fixiert, die in Richtung der Messplatte den Peltierheizer 5 gleichmäßig anpressen.

Durch Verlängerung der Bolzen 21 entsteht somit eine Führung, die mit einem Federprinzip den Kühler 8 an den Heizer 6 und das Peltierelement 5 drückt. Gegen diese Federwirkung zwischen Peltierelement 5 mit Heizer 6 und Kühlsystem 8 wird zur mechanischen Trennung eine Kontaktiervorrichtung 7 als Hebelwerk zum Abheben des Kühlers 8 gegen den Federdruck eingesetzt. Das Hebelwerk stützt sich an der Bolzenführung selbst ab. Die Hebekraft kann durch eine Hebeleinrichtung 24 extern am Gerät manuell erzeugt werden, beispielsweise wie in Figur 4 gezeigt. Der Luftspalt 23 in der Darstellung zeigt den Zustand bei aktivem Heizsystem, die Kühlung ist inaktiv und der Kühler 8 somit vom Heizer 6 und dem Peltierelement 5 getrennt.

Vorteilhaft wird die Hebekraft gemäß den Figuren 5 und 6 durch ein Servostellglied, beziehungsweise einen Servomotor 27, elektrisch aufgebracht.

In Figur 5 ist ein Linearantrieb 25 schematisch als Stellglied für die Erzeugung des Luftspaltes 23 dargestellt.

In Figur 6 ist die Verwendung eines Servomotors 27 mit Schneckengetriebe 26 dargestellt, welches über eine Montagehalterung oder Fahrstange an dem Bolzen 21 montiert ist. An der Stelle, wo auch der Hebel ansetzt, direkt unter der Öse des Kühlers 8, befindet sich ein Zahnrad 28 mit Innengewinde. Das Schneckengetriebe 26 dreht somit das Zahnrad 28, welches auf einem Gewindebolzen nach oben oder unten gefahren werden kann. Dadurch kann der Kühler 8 angehoben werden und somit den Luftspalt 23 entstehen lassen. Wird die Schraube heruntergedreht, bis die Federspannkraft auf die Mutter nicht mehr wirkt, so ist der Luftspalt 23 durch den Druck der hier nicht dargestellten Feder auf den Kühler 8 geschlossen.

Durch die Verwendung der thermischen Abkopplung kann als Kühlmittel nunmehr auch Wasser benutzt werden, was die Verwendung einer externen Wasserkühlung beziehungsweise einer reinen Luftkühlung ermöglicht. Somit entfallen Druckausgleichsbehälter, Pumpe und Wärmeübertrager.

Durch die mechanische Trennung zwischen Kühlsystem und Heizsystem ist es möglich, auch höhere Temperaturen jenseits des Arbeitsbereichs der Flüssigkühlung zu fahren. Dies kann den möglichen Einsatzbereich von derzeit 200 bis 250 °C erheblich erweitern.

Der Luftspalt 23 zwischen Heiz- und Kühlsystem wird mit einem sehr engen Rahmen geschützt, um die Verschmutzung bei längerem Betrieb auf den Oberflächen zwischen den Systemteilen zu reduzieren.

Alternativ kann die Ausbildung des Luftspaltes auch mit anderen technischen Mitteln erreicht werden. Durch die Anwendung eines elektromechanischen Phasenwechselmaterials kann beispielsweise der Hebel entfallen. Stattdessen wird ein fester Spalt durch eine geeignete Fixierung im Aktionsradius des Phasenwechselmediums des Kühlsystems an den Bolzen gewählt.

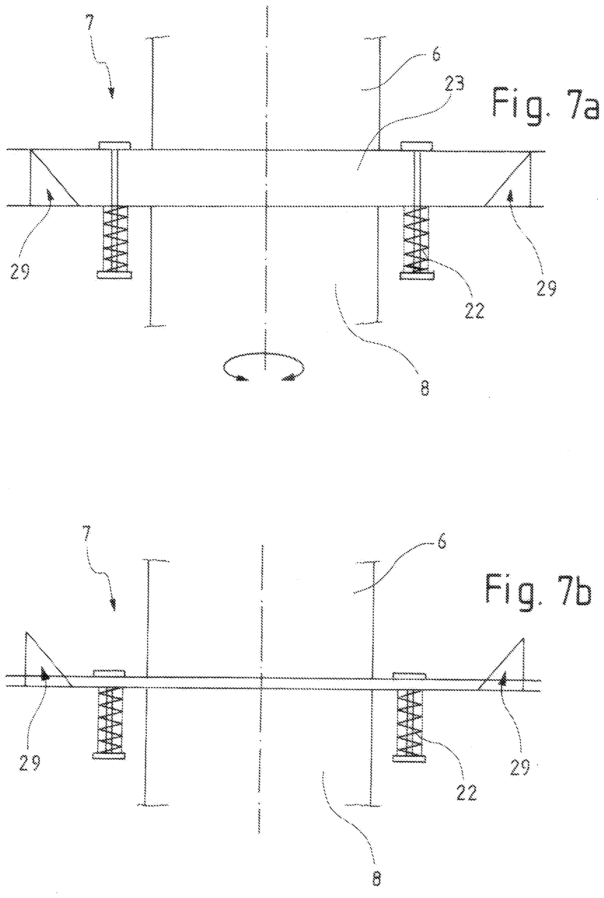

In Fig. 7a ist ein Hebewerk als Kontaktiervorrichtung 7 zur Erzeugung eines Luftspaltes 23 zwischen dem Heizer 6 und dem Kühler 8 als Nockengetriebe mit vertikaler Drehachse in der geöffneten, beabstandeten Stellung von Heizer 6 und Kühler 8 dargestellt. Eine Nockenscheibe mit zwei Nocken 29 ist um eine vertikale Drehachse mit dem Kühler 8 verbunden. Nach einer durch einen Rotationspfeil angedeuteten Drehung der Nockenscheibe mit den Nocken 29 um beispielsweise 30° befinden sich die Nocken 29 entgegen dem Druck der Federn 22 in ausgefahrener Stellung und die Wärmeleitung zwischen Heizer 6 und Kühler 8 ist durch den Luftspalt 23 unterbrochen, das System heizt.

In Fig. 7b ist die Kontaktiervorrichtung 7 nach Drehung der Nockenscheibe mit den Nocken 29 um beispielsweise 30° in der Gegenrichtung dargestellt, wobei die Nocken 29 in die Öffnungen des Heizblockes hineingleiten. Durch den Druck der Federn 22 wird der Luftspalt 23 geschlossen und der Kühler 8 kann Wärme von dem Heizer 6 und der nicht dargestellten, darüber angeordneten Probe abtransportieren und die Probe somit kühlen.

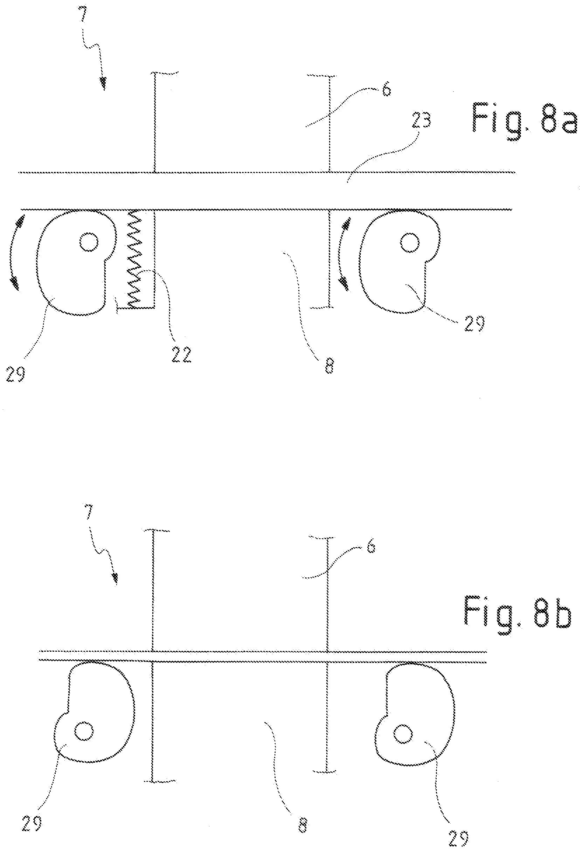

Eine alternative Ausgestaltung des Nockengetriebes ist in den Figuren 8a und 8b dargestellt. Dabei ist die Nockenscheibe mit den Nocken 29 auf einer horizontalen Achse geführt.

In Fig. 8a ist die Kontaktiervorrichtung 7 in der Heizstellung mit Luftspalt 23 dargestellt. Die Nocken 29 sind nach unten gefahren und die als Zugfeder ausgeführte Feder 22 zieht den Kühler 8 vom Heizer 6 weg.

In Fig. 8b ist die Kontaktiervorrichtung 7 in der Kühlstellung ohne Luftspalt dargestellt. Die Nockenscheiben mit den Nocken 29 sind um 180° nach oben gedreht und drücken beziehungsweise pressen den Kühler 8 flächig auf den Heizer 6 entgegen der Federkraft der Feder 22.

Den dargestellten Ausführungsbeispielen ist zu entnehmen, dass die konkrete Ausbildung der Federn 22 je nach umgesetztem Konstruktionsprinzip als Zug- oder Druckfedern ausgeführt sein können. Entscheidend ist die Ausbildung einer Flächenpressung zwischen dem Heizer 6 und dem Kühler 8 im Falle der Kühlung.

### Bezugszeichenliste

- 1: Messgerät
- 2: Probe
- 3: Probenaufnahme, Messplatte
- 4: Wärmeleitschicht
- 5: Peltierelement, Peltierheizer/-kühler
- 6: (elektrischer) Heizer
- 7: Kontaktiervorrichtung
- 8: Kühler
- 9: Ventilator
- 10: Kälteträgerspeicher und Druckausgleichsbehälter
- 11: Pumpe
- 12: Fluidleitungen
- 13: externe Kühleinrichtung
- 14: Rotationskegel
- 15: Kühlkörper
- 16: Deckel
- 17: Fluideingang
- 18: Fluidausgang
- 19: Rippen
- 20: Umlenkbereich
- 21: Bolzen
- 22: Feder
- 23: Luftspalt
- 24: Hebeleinrichtung
- 25: Linearantrieb
- 26: Schneckengetriebe
- 27: Servomotor
- 28: Zahnrad mit Innengewinde
- 29: Nocken

## Patentansprüche

1. Temperieranordnung für Messgeräte (1), wobei die Probe (2) auf einer Messplatte (3) angeordnet ist, wobei die Messplatte (3) über ein Heizsystem mit einem Heizer (6) beheizbar ausgebildet ist und wobei ein Kühlsystem mit einem Kühler (8) vorgesehen ist, welcher über eine Kontaktiervorrichtung (7) mit dem Heizer (6) mechanisch temporär in thermischen Kontakt bringbar ausgebildet ist und wobei das Heizsystem ein Peltierelement (5) als Peltierheizer und einen elektrischen resistiven Heizer (6) aufweist, **dadurch gekennzeichnet, dass** das Peltierelement (5) zwischen der Messplatte (3) und dem elektrischen resistiven Heizer (6) angeordnet ist.

2. Temperieranordnung nach Anspruch 1, **dadurch gekennzeichnet, dass** die Kontaktiervorrichtung (7) in thermisch isolierender Stellung einen Luftspalt (23) und in thermisch kontaktierter Stellung keinen Luftspalt zwischen dem Kühler (8) und dem Heizsystem ausbildet.

3. Temperieranordnung nach Anspruch 1 oder 2, **dadurch gekennzeichnet, dass** die Kontaktiervorrichtung (7) zum mechanischen linearen Bewegen des Kühlers (8) in vertikaler Richtung ausgebildet ist.

4. Temperieranordnung nach Anspruch 3, **dadurch gekennzeichnet, dass** ein Hebewerk für die lineare Bewegung des Kühlers (8) vorgesehen ist.

5. Temperieranordnung nach Anspruch 4, **dadurch gekennzeichnet, dass** das Hebewerk für die lineare Bewegung des Kühlers (8) als Schneckengetriebe (26) oder als Nockengetriebe mit Nocken (29) ausgeführt ist.

6. Temperieranordnung nach Anspruch 4, **dadurch gekennzeichnet, dass** das Hebewerk für die lineare Bewegung des Kühlers (8) als mechanische Hebeleinrichtung (24) ausgeführt ist.

7. Temperieranordnung nach Anspruch 4, **dadurch gekennzeichnet, dass** das Hebewerk für die lineare Bewegung des Kühlers (8) mittels Linearantrieb (25) ausgeführt ist.

8. Temperieranordnung nach Anspruch 4, **dadurch gekennzeichnet, dass** das Hebewerk für die lineare Bewegung des Kühlers (8) als Luft-Vakuum-Gasdruckzylinder, phasenwechselndes Material mit Dickenänderung oder mit der Erzeugung von Luftblasen ausgeführt ist.

9. Temperieranordnung nach einem der Ansprüche 1 bis 8, **dadurch gekennzeichnet, dass** die Kontaktkraft zur thermischen Kontaktierung von Kühler (8) und Heizer (6) durch Federn (22) realisiert ist.

10. Temperieranordnung nach einem der Ansprüche 1 bis 9, **dadurch gekennzeichnet, dass** das Kühlsystem einen Kühler (8) aufweist, der von einem Kälteträger durchströmbar und/oder von Kühlluft umströmbar ausgebildet und in der Temperieranordnung angeordnet ist/sind.

11. Temperieranordnung nach einem der Ansprüche 1 bis 10, **dadurch gekennzeichnet, dass** ein Ventilator (9) zur Kühlung des Kühlers (8) mit Kühlluft vorgesehen ist.

12. Temperieranordnung nach einem der Ansprüche 1 bis 11, **dadurch gekennzeichnet, dass** der Peltierheizer auch als Peltierkühler (5) betreibbar ausgebildet ist.

13. Temperieranordnung nach Anspruch 10, **dadurch gekennzeichnet, dass** eine separate externe Kühleinrichtung (13) zur Kühlung des Kälteträgers vorgesehen ist.

14. Verfahren zur Temperierung einer Probe in einem Messgerät (1) mit einer Temperieranordnung nach einem der vorangehenden Ansprüche, wobei
- die Heizung der Probe (2) bei vorgebbarer größerer Abweichung von Solltemperatur zu Probentemperatur mittels des elektrischen Heizers (6) erfolgt und erst bei vorgebbarer geringerer Abweichung von Solltemperatur zu Probentemperatur die Heizung über den Peltierheizer (5) erfolgt und dass die Kühlung dabei abgeschaltet und das Kühlsystem mittels der Kontaktiervorrichtung (7) thermisch vom Heizsystem getrennt sind,
- die Kühlung der Probe (2) nach Abschaltung des Heizsystems erfolgt, wobei der thermische Kontakt des Kühlsystems zum Heizsystem mittels der Kontaktiervorrichtung (7) hergestellt und die Fluidkühlung eingeschaltet werden.

15. Verfahren nach Anspruch 14, **dadurch gekennzeichnet, dass** die Kühlung durch eine Luftkühlung mittels Ventilator (9) unterstützt wird.

16. Verfahren nach Anspruch 14 oder 15, **dadurch gekennzeichnet, dass** die Kühlung durch eine externe Kühleinrichtung (13) unterstützt wird.

## Claims

1. Temperature control assembly for measuring devices (1), whereby
the sample (2) is arranged on a measuring plate (3), whereby the measuring plate (3) is designed capable of being heated via a heating system with a heater (6) and whereby
a cooling system with a cooler (8)
is provided, which is designed capable of being brought into thermal contact - by temporary mechanical means - with the heater (6) via a contacting device (7) and whereby
the heating system has a Peltier element (5) as a
Peltier heater, and an electrical resistive heater (6), **characterised in that**
the Peltier element (5) is arranged between the measuring plate (3) and the electrical resistive heater (6).

2. Temperature control assembly in accordance with Claim 1, **characterised in that** the contacting device (7), in a thermally insulating position, forms an air gap (23) and, in a position where there is thermal contact, forms no air gap between the cooler (8) and the heating system.

3. Temperature control assembly in accordance with Claim 1 or 2, **characterised in that** the contacting device (7) is designed for the mechanical linear movement of the cooler in a vertical direction (8).

4. Temperature control assembly in accordance with Claim 3, **characterised in that** a lifting mechanism is provided for the linear movement of the cooler (8).

5. Temperature control assembly in accordance with Claim 4, **characterised in that** the lifting mechanism for the linear movement of the cooler (8) is designed as a worm gear unit (26) or as a cam gear unit with cams (29).

6. Temperature control assembly in accordance with Claim 4, **characterised in that** the lifting mechanism for the linear movement of the cooler (8) is designed as a mechanical lever unit (24).

7. Temperature control assembly in accordance with Claim 4, **characterised in that** the lifting mechanism for the linear movement of the cooler (8) is designed so as to be by means of linear drive (25).

8. Temperature control assembly in accordance with Claim 4, **characterised in that** the lifting mechanism for the linear movement of the cooler (8) is designed as an air-vacuum gas-pressure cylinder, phase-changing material with thickness change or with the generation of air bubbles.

9. Temperature control assembly in accordance with one of Claims 1 to 8, **characterised in that** the contact force for the thermal contacting of cooler (8) and heater (6) is brought about via springs (22).

10. Temperature control assembly in accordance with one of Claims 1 to 9, **characterised in that** the cooling system has a cooler (8) which is designed so that a refrigerant medium can flow through it and/or cooling air can flow around it and is/are arranged in the temperature control assembly.

11. Temperature control assembly in accordance with one of Claims 1 to 10, **characterised in that** a fan (9) is provided for cooling the cooler (8) with cooling air.

12. Temperature control assembly in accordance with one of Claims 1 to 11, **characterised in that** the Peltier heater is designed also capable of being operated as a Peltier cooler (5).

13. Temperature control assembly in accordance with Claim 10, **characterised in that** a separate external cooling device (13) is provided for cooling the refrigerant medium.

14. Method for temperature-controlling a sample in a measuring device (1) with a temperature control assembly in accordance with one of the preceding claims, whereby
- the heating of the sample (2) takes place by means of the electric heater (6) in the case of a - pre-settable - large deviation between the target temperature and the sample temperature and only when there is a - pre-settable - small deviation between the target temperature and the sample temperature does the heating take place via the Peltier heater (5) and that the cooling is switched off in the process and the cooling system is thermally separated from the heating system by means of the contacting device (7),
- the cooling of the sample (2) takes place after the heating system has been switched off, whereby the thermal contact between the cooling system and the heating system is produced by means of the contacting device (7) and the fluid cooling is switched on.

15. Method in accordance with Claim 14, **characterised in that** the cooling is supported by air cooling by means of a fan (9).

16. Method in accordance with Claim 14 or 15, **characterised in that** the cooling is supported by an external cooling device (13).

## Revendications

1. Agencement de thermorégulation pour appareils de mesure (1) selon lequel
la sonde (2) est disposée sur une plaque de mesure (3), la plaque de mesure (3) étant constituée d'un système de chauffage avec un élément chauffant (6) et
un système de refroidissement avec un élément refroidissant (8) étant prévu, lequel se compose d'un dispositif de contact (7) pouvant établir mécaniquement un contact thermique temporaire avec l'élément chauffant (6) et
le système de chauffage disposant d'un élément Peltier (5) en tant qu'élément chauffant Peltier et d'un élément chauffant résistif électrique (6), **caractérisé en ce que**
l'élément Peltier (5) est disposé entre la plaque de mesure (3) et l'élément chauffant résistif électrique (6).

2. Agencement de thermorégulation selon la revendication 1, **caractérisé en ce que** le dispositif de contact (7) forme, en position d'isolation thermique, un entrefer (23) et, en position de contact thermique, aucun entrefer entre l'élément refroidissant (8) et le système de chauffage.

3. Agencement de thermorégulation selon la revendication 1 ou 2, **caractérisé en ce que** le dispositif de contact (7) est disposé à la verticale pour le déplacement linéaire mécanique de l'élément refroidissant (8).

4. Agencement de thermorégulation selon la revendication 3, **caractérisé en ce que** un outil de levage est prévu pour le déplacement linéaire de l'élément refroidissant (8).

5. Agencement de thermorégulation selon la revendication 4, **caractérisé en ce que** l'outil de levage pour le déplacement linéaire de l'élément refroidissant (8) prend la forme d'une vis sans fin (26) ou d'une roue à came (29).

6. Agencement de thermorégulation selon la revendication 4, **caractérisé en ce que** l'outil de levage pour le déplacement linéaire de l'élément refroidissant (8) prend la forme d'un dispositif à levier mécanique (24).

7. Agencement de thermorégulation selon la revendication 4, **caractérisé en ce que** l'outil de levage pour le déplacement linéaire de l'élément refroidissant (8) est doté d'un entraînement linéaire.

8. Agencement de thermorégulation selon la revendication 4, **caractérisé en ce que** l'outil de levage pour le déplacement linéaire de l'élément refroidissant (8) prend la forme d'un vérin pneumatique air/vide, d'un matériau à changement de phase avec modification de l'épaisseur ou avec génération de bulles d'air.

9. Agencement de thermorégulation selon l'une des revendications 1 à 8, **caractérisé en ce que** la force de contact thermique de l'élément refroidissant (8) et de l'élément chauffant (6) est obtenue à l'aide de ressorts (22).

10. Agencement de thermorégulation selon l'une des revendications 1 à 9, **caractérisé en ce que** le système de refroidissement est doté d'un élément refroidissant (8) pouvant être traversé par un caloporteur et/ou pouvant être parcouru par de l'air de refroidissement et disposé dans l'agencement de thermorégulation.

11. Agencement de thermorégulation selon l'une des revendications 1 à 10, **caractérisé en ce que** un ventilateur (9) est prévu pour le refroidissement par air de l'élément refroidissant (8).

12. Agencement de thermorégulation selon l'une des revendications 1 à 11, **caractérisé en ce que** l'élément chauffant Peltier peut aussi être utilisé comme élément refroidissant Peltier (5).

13. Agencement de thermorégulation selon la revendication 10, **caractérisé en ce que** un dispositif de refroidissement externe distinct (13) est prévu pour le refroidissement du caloporteur.

14. Procédé de thermorégulation d'une sonde dans un appareil de mesure (1) avec un agencement de thermorégulation selon l'une des revendications précédentes,
- le chauffage de la sonde (2) étant réalisé, en cas d'écart supérieur à la valeur prédéfinie entre la température de consigne et la température de la sonde, au moyen d'un élément chauffant électrique (6) et, en cas d'écart inférieur à la valeur prédéfinie entre la température de consigne et la température de la sonde, au moyen de l'élément chauffant Peltier (5), le refroidissement étant désactivé et le système de refroidissement isolé thermiquement du système de chauffage au moyen du dispositif de contact (7),
- le refroidissement de la sonde (2) intervenant après la désactivation du système de chauffage, le contact thermique entre le système de refroidissement et le système de chauffage étant établi à l'aide du dispositif de contact (7) et le refroidissement du fluide étant activé.

15. Procédé selon la revendication 14, **caractérisé en ce que** le refroidissement prend la forme d'un refroidissement par air au moyen d'un ventilateur (9).

16. Procédé selon la revendication 14 ou 15, **caractérisé en ce que** le refroidissement est assuré par un dispositif de refroidissement externe (13).
